# EUROPEAN PATENT APPLICATION

(11) **EP 2 990 318 A1**
(43) Date of publication of application: **02.03.2016**
(21) Application number: 15172451.5
(22) Date of filing: 17.06.2015
(51) Int. Cl.: B62J 99/00, B62K 11/04

(54) **ARRANGEMENT OF MOTORCYCLE VOLTAGE REGULATOR**

(30) Priority: 29.08.2014 TW 103129921
(71) Applicant: Kwang Yang Motor Co., Ltd., Kaohsiung City (TW)
(72) Inventor: Tung, Pei-Chun, Cambridge, CB1 1AH (GB); Huang, Chun-Hao, Cambridge, CB1 1AH (GB)
(74) Representative: Horak, Michael

(57) **Abstract**

The present invention relates to an arrangement of a motorcycle voltage regulator. The motorcycle (2) includes at least a frame unit (3), a head tube (31) and a fuel tank (4) . An engine unit (5) is arranged under the fuel tank (4). A seat cushion (6) is arranged behind the fuel tank (4). A voltage regulator (9) is set between the head tube (31) and the fuel tank (4). With the voltage regulator (9) being arranged in a space delimited among the head tube (31), a pair of left and right upper support tubes (32), a pair of left and right lower support tubes (33), and the fuel tank (4), said space can be fully used and an effect of protection of the voltage regulator (9) can be achieved. Further, the voltage regulator (9) can be provided with an excellent effect of heat dissipation.

## Description

### (a) Technical Field of the Invention

The present invention generally relates to an arrangement of a voltage regulator of a motorcycle, and more particularly to an arrangement of a motorcycle voltage regulator that provides the voltage regulator with excellent high dissipation capability and helps prevent deterioration of product outside appearance thereby enhancing the use performance of the motorcycle.

### (b) Description of the Prior Art

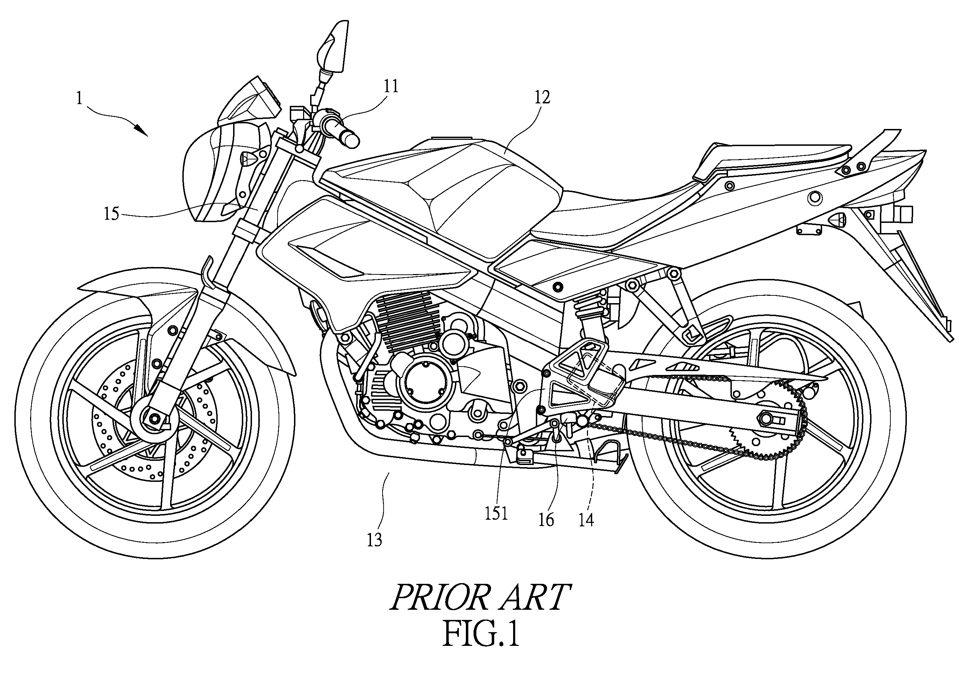

As shown in FIG 1, a straddling motorcycle 1 comprises a fuel tank 12 that is arranged rearward of a steering mechanism 11. An engine unit 13 that generates power is arranged under the fuel tank 12.

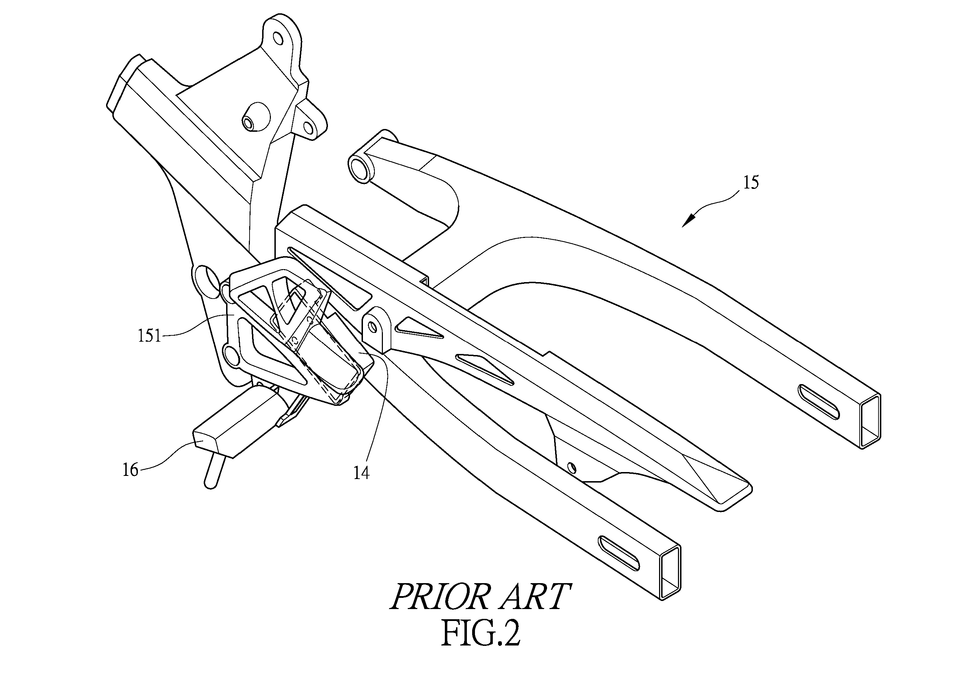

As shown in FIGS. 1 and 2, a voltage regulator 14 that regulates electrical voltage generated by a generator is arranged at an outer side of a front footrest bar decoration cove 151 of a frame unit 15 and adjacent to a front footrest bar 16 in order to provide a better effect of heat dissipation to the regulator 14.

The above described arrangement of setting the regulator 15 at the inner side of the front footrest bar decoration cover 151 of the frame unit 15 and adjacent to the front footrest bar 16, although providing the regulator 14 with a better effect of heat dissipation, is very likely to cause a negative influence on the outside appearance of the motorcycle. And, this is an issue to be addressed by the motorcycle industry.

### SUMMARY OF THE INVENTION

The primary object of the present invention is to provide an arrangement of a motorcycle voltage regulator, which helps overcome the deficiency of the conventional arrangement of a voltage regulator that deteriorates the product outside appearance of the motorcycle.

To achieve the above object, a technical solution adopted is that an arrangement of a motorcycle voltage regulator is provided. The motorcycle comprises at least a frame unit. The frame unit comprises a head tube. The head tube comprises a steering mechanism mounted thereto. A fuel tank is arranged behind the steering mechanism and set on the frame unit. An engine unit is arranged under the fuel tank to generate power. A seat cushion is arranged behind the fuel tank to support a rider sitting thereon. A voltage regulator is set between the head tube and the fuel tank.

An efficacy that the present invention may achieve with the above technical solution is that a voltage regulator is arranged in a space delimited among a head tube, a pair of left and right upper support tubes, a pair of left and right lower support tubes, and a fuel tank in order to make use of the space delimited among the head tube, the pair of left and right upper support tubes, the pair of left and right lower support tubes, and the fuel tank and to provide an effect of protection to the voltage regulator; meanwhile, the voltage regulator is provided with an excellent effect of heat dissipation so as to improve the use performance of the motorcycle.

Another efficacy that the present invention may achieve is that passages are formed on two sides of a head tube by respectively spacing front covers from the head tube by proper distances and heat dissipation holes are formed in the front covers to face the front side of the motorcycle, whereby external cool air is allowed to flow through the passages and the heat dissipation holes into the front covers to dissipate heat from the voltage regulator so as to provide the voltage regulator with an excellent effect of heat dissipation.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a schematic view showing a conventional arrangement of a voltage regulator of a motorcycle.
FIG 2 is a schematic view showing a portion of the conventional arrangement of the motorcycle voltage regulator.
FIG 3 is a schematic view showing an arrangement of a voltage regulator in a motorcycle according to the present invention.
FIG 4 is an exploded view showing the arrangement of the voltage regulator according to the present invention.
FIG 5 is a perspective view showing the arrangement of the voltage regulator of the present invention in an assembled form.
FIG 6 is a front view showing an arrangement of the voltage regulator, a front cover, and a head tube according to the present invention.
FIG 7 is a top plan view showing the arrangement of the voltage regulator, the front cover, and the head tube according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

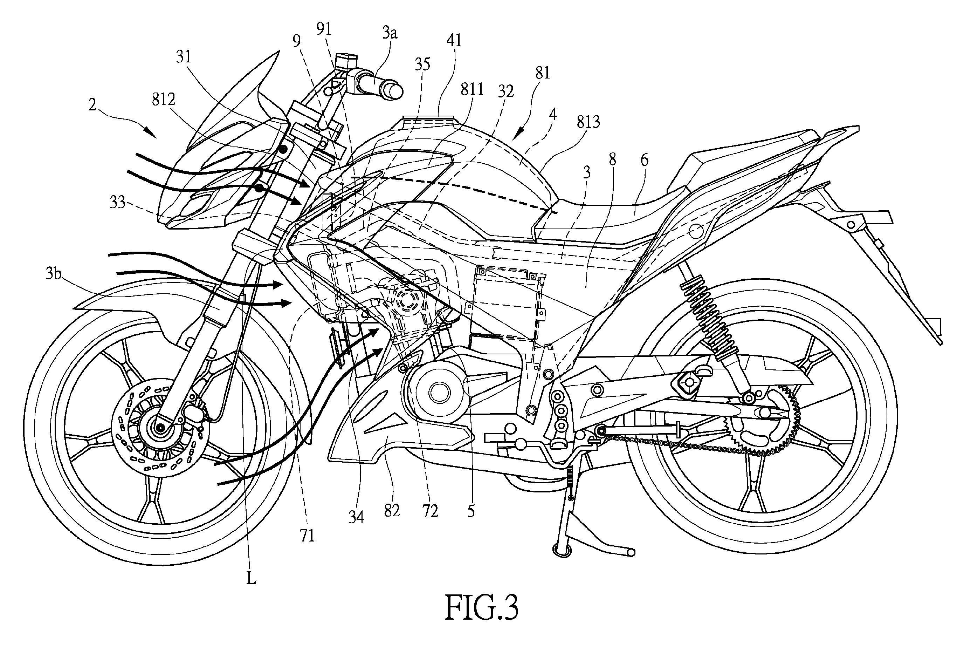

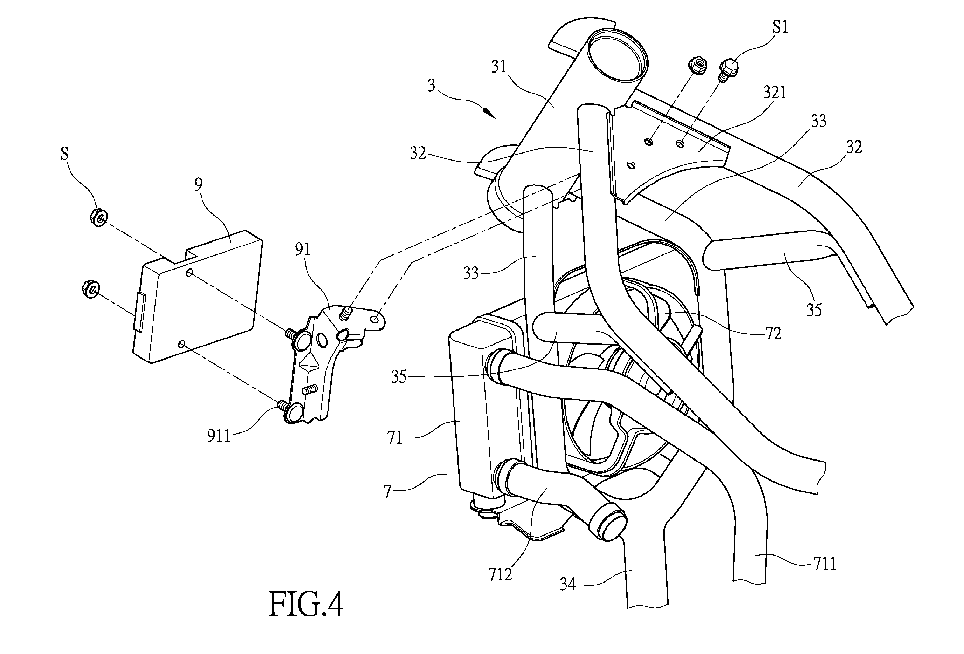

Referring first to FIGS. 3 and 4, the present invention provides a straddling motorcycle 2, which comprises at least a frame unit 3. The frame unit 3 comprises a head tube 31 to which a steering mechanism 3a is mounted. The head tube 31 has a lower end to which a shock absorber 3b is coupled. The head tube 31 comprises a pair of left and right upper support tubes 32 extending therefrom in a direction toward a rear side of the motorcycle. The head tube 31 also comprises a pair of left and right lower support tubes 33 extending therefrom toward the rear side of the motorcycle and located below the upper support tubes 32. The lower support tubes 33 have lower ends to which a down tube 34 is connected. Vertical tubes 35 are arranged respectively between the upper support tubes 32 and the lower support tubes 33.

As shown in FIGS. 3 and 4, a fuel tank 4 is arranged rearward of the steering mechanism 3a and located on the pair of left and right upper support tubes 32. The fuel tank 4 comprises a fuel feeling opening 41. An engine unit 5 is arranged below the fuel tank 4 to generate power. A seat cushion 6 is arranged rearward of the fuel tank 4 for supporting a rider sitting thereon.

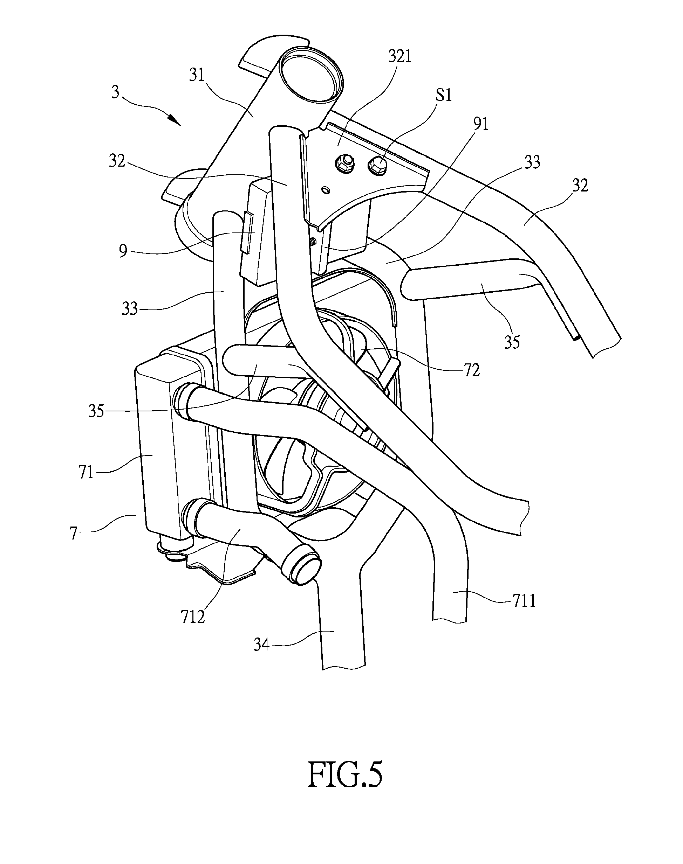

As shown in FIGS. 3, 4, and 5, the lower support tubes 33 comprise a radiator assembly 7 mounted thereto. The radiator assembly 7 comprises a radiator 71 and a radiator fan 72. The radiator 71 comprises an inlet tube 711 and an outlet tube 712. The inlet tube 711 and the outlet tube 712 are connected to the engine unit 5 to effectively remove a high temperature generated by the operation of the engine unit 5 thereby maintaining a normal operation of the engine unit 5.

As shown in FIGS. 3, 6, and 7, the motorcycle 2 comprises a body side cover 8 arranged on and covering each of two sides thereof to extend from a lower side of the fuel tank 4 toward a lower side of the seat cushion 6; and the motorcycle 2 comprises a fuel tank decoration cover 81 arranged on and covering each of two sides from a lower side of the fuel tank 4 to an upper side of the engine unit 5. The fuel tank decoration covers 81 cover a portion of the engine unit 5 and upper and front portions of the fuel tank 4. Further, the motorcycle 2 comprises a lower flow guide cover 82 arranged at and covering a lower side of the engine unit 5.

As shown in FIGS. 3, 6, and 7, the fuel tank decoration covers 81 comprise main covers 811, front covers 812, and upper covers 813. The main covers 811 are made symmetric of left and right sides and thus only one of them will be described for illustration. The main cover 811 is in the form of a V-shaped plate. The main cover 811 comprises a front turn signal L mounted thereto. The front cover 812 is set on and covers a front side of the fuel tank 4. In other words, the front cover 812 is located between the head tube 31 and the fuel tank 4 and at a front end of the main cover 811. The front cover 812 and the head tube 31 is spaced from each other by a distance so that the spacing distance between the front cover 812 and the head tube 31 form a passage P for airflows. Further, the front cover 812 comprises a heat dissipation hole 8121 facing a front side of the motorcycle. The upper cover 813 is set on and covers an upper side of the fuel tank 4.

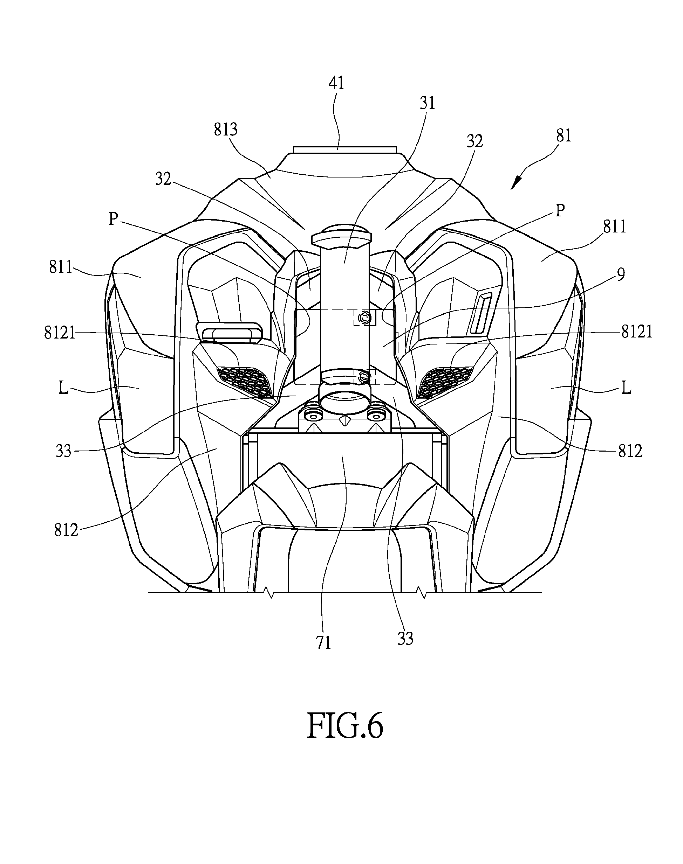

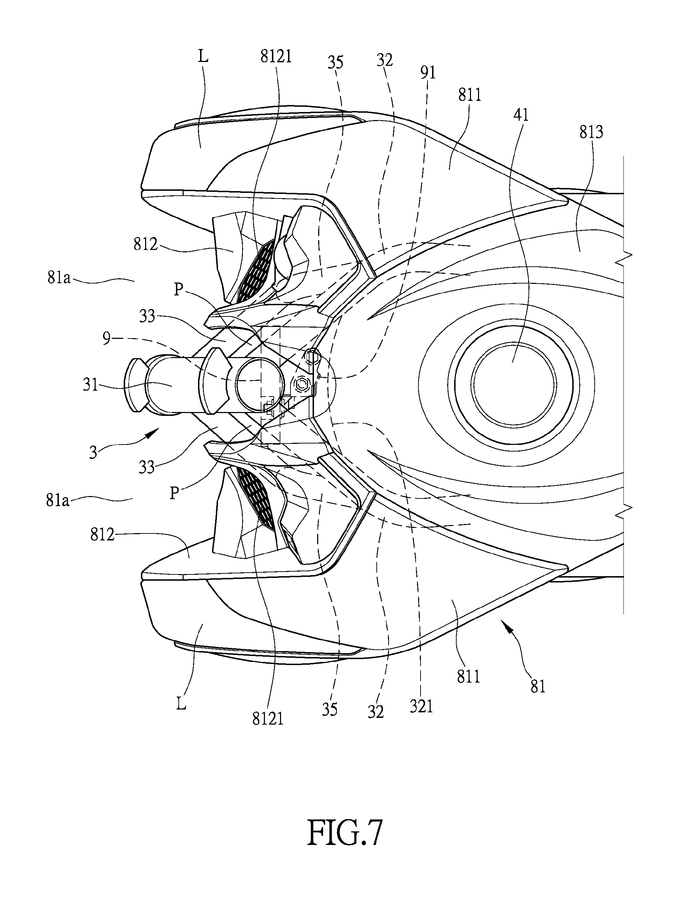

As shown in FIGS. 6, and 7, the fuel tank decoration covers 81 comprise cavities 81a that are formed by being recessed to face a front side of motorcycle. The cavities 81a surround the head tube 31 at three sides thereof so that the cavities 81a form an airflow collection port.

As shown in FIGS. 3, 4, and 5, in an embodiment of an arrangement of a motorcycle voltage regulator according to the present invention, the pair of left and right upper support tubes 32 comprise a fixation board 321 mounted thereto. The fixation board 321 extends from the head tube 31 and along the pair of left and right upper support tubes 32 in a direction toward a rear side of the motorcycle. The fixation board 321 receives a voltage regulator 9 that regulates electrical voltage supplied from a generator (not shown) to be mounted thereto by means of a mounting member 91. Specifically, the voltage regulator 9 is fastened to mounting threaded rods 911 of the mounting member 91 by means of threaded fasteners S. The mounting member 91 with the voltage regulator 9 fastened thereto is fixed to the fixation board 321 by means of threaded fasteners S1. As such, the voltage regulator 9 is securely fixed on the fixation board 321. With the voltage regulator 9 being so fixed on the fixation board 321, the voltage regulator 9 is located between the head tube 31 and the fuel tank. More specifically, the voltage regulator 9 is located between the front cover 812 and the fuel tank and is located above the radiator assembly 7. In other words, the voltage regulator 9 is located between the radiator assembly 7 and the steering mechanism 3a. More specifically, the voltage regulator 9 is arranged in a space delimited among the head tube 31, the pair of left and right upper support tubes 32, the pair of left and right lower support tubes 33, and the fuel tank 4 in such a way that the head tube 31 is located at the front side of the voltage regulator 9 and the upper support tubes 32 and the lower support tubes 33 are respectively located at the left and right sides of the voltage regulator 9 to collectively form a confinement configuration by which exposure of the voltage regulator 9 to the outside is prevented thereby preventing incurring a negative influence on a product outside appearance of the motorcycle 2 and at the same time, achieving a full use of the space delimited among the head tube 31, the pair of left and right upper support tubes 32, the pair of left and right lower support tubes 33, and the fuel tank 4, and providing an effect of protection of the voltage regulator 9.

As shown in FIGS. 3, 6, and 7, in an embodiment of the arrangement of the motorcycle voltage regulator according to the present invention, during the riding of the motorcycle 2, the movement of the motorcycle 2 causes external cool air to be collected in the cavities 81a of the fuel tank decoration covers 81 and then moving through the passages P between the front covers 812 and the head tube 31 and the heat dissipation holes 8121 of the front covers 812 to enter the front covers 812 and directly blow against the voltage regulator 9. Further, in the condition that a heat dissipation airflow is induced by the operation of the radiator fan 72 of the radiator assembly 7 to move rearwards and a guided-in airflow is guided in by the lower flow guide cover 82 to move rearwards, the heat dissipation airflow and the guided-in airflow help drive external cool air into the front covers 812 to bring away high temperature of the voltage regulator 9 thereby providing the voltage regulator 9 with an excellent effect of heat dissipation.

As shown in FIG 3, when the motorcycle 2 is in an idle condition, in the condition that the heat dissipation airflow is induced by the operation of the radiator fan 72 of the radiator assembly 7 in a direction toward the rear side of the motorcycle, the heat dissipation airflow also helps drive external cool air into the front covers 812 to provide heat dissipation to the voltage regulator 9 thereby achieving an excellent effect of heat dissipation from the voltage regulator 9.

A primary efficacy of the present invention is that a voltage regulator 9 is arranged in a space delimited among a head tube 31, a pair of left and right upper support tubes 32, a pair of left and right lower support tubes 33, and a fuel tank 4 in order to make use of the space delimited among the head tube 31, the pair of left and right upper support tubes 32, the pair of left and right lower support tubes 33, and the fuel tank 4 and to provide an effect of protection to the voltage regulator 9; meanwhile, the voltage regulator 9 is provided with an excellent effect of heat dissipation so as to improve the use performance of the motorcycle 2.

Another primary efficacy of the present invention is that passages P are formed on two sides of a head tube 31 by respectively spacing front covers 812 from the head tube 31 by proper distances and heat dissipation holes 8121 are formed in two sides of the front covers 812 to face the front side of the motorcycle, whereby external cool air is allowed to flow through the passages P and the heat dissipation holes 8121 into the front covers 812 to dissipate heat from the voltage regulator 9 so as to provide the voltage regulator 9 with an excellent effect of heat dissipation.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. An arrangement of a motorcycle voltage regulator, a motorcycle (2) comprising at least a frame unit (3), the frame unit (3) comprising a head tube (31), the head tube (31) comprising a steering mechanism (3a) mounted thereto, a fuel tank (4) being arranged behind the steering mechanism (3a) and set on the frame unit (3), an engine unit (5) being arranged under the fuel tank (4) to generate power, a seat cushion (6) being arranged behind the fuel tank (4) to support a rider sitting thereon, **characterized in that** a voltage regulator (9) is set between the head tube (31) and the fuel tank (4).

2. The arrangement of the motorcycle voltage regulator according to claim 1, wherein upper support tubes (32) comprise a fixation board (321) mounted thereto, the fixation board (321) extending from the head tube (31) and along the upper support tubes (32) toward a motorcycle rear side, the fixation board (321) receiving the voltage regulator (9) to be fixed thereto.

3. The arrangement of the motorcycle voltage regulator according to claim 2, wherein the voltage regulator (9) is fastened by threaded fasteners (S) to a mounting member (91), the mounting member (91) being fastened by threaded fasteners (S1) to the fixation board (321).

4. The arrangement of the motorcycle voltage regulator according to claim 1, wherein the motorcycle (2) comprises fuel tank decoration covers (81), the fuel tank decoration covers (81) comprising main covers (811), front covers (812), and upper covers (813), the main covers (811) being arranged toward a motorcycle front side and located at two sides of the fuel tank (4), the front covers (812) being arranged at front ends of the main covers (811), the upper covers (813) being set on and covering an upper side of the fuel tank (4).

5. The arrangement of the motorcycle voltage regulator according to claim 4, wherein the front covers (812) are respectively spaced from two sides of the head tube (31) by distances, the spacing distances between the front covers (812) and the head tube (31) each forming a passage (P) for airflow.

6. The arrangement of the motorcycle voltage regulator according to claim 4 or 5, wherein the front covers (812) comprise heat dissipation holes (8121) formed therein.

7. The arrangement of the motorcycle voltage regulator according to claim 1, wherein the head tube (31) comprise a pair of left and right upper support tubes (32) extending therefrom in a direction toward a motorcycle rear side, the head tube (31) comprising a pair of left and right lower support tubes (33) extending therefrom in a direction toward the motorcycle rear side and located below the upper support tubes (32), the head tube (31), the pair of left and right upper support tubes (32), the pair of left and right lower support tubes (33), and the fuel tank (4) collectively delimiting a space in which the voltage regulator (9) is arranged.

8. The arrangement of the motorcycle voltage regulator according to claim 4, wherein the main covers (811) comprise front turn signals (L) mounted to front ends thereof and the fuel tank decoration covers (81) comprise cavities (81a) that are formed by bing recessed to face a motorcycle front side, the cavities (81a) surrounding the head tube (31) at three sides thereof so that the cavities (81a) form an air collection port.

9. The arrangement of the motorcycle voltage regulator according to claim 7, wherein the lower support tubes (33) comprise a radiator assembly (7) mounted thereto, the radiator assembly (7) comprising a radiator (71) and a radiator fan (72); and the head tube (31) comprises a steering mechanism (3a) mounted thereto, the voltage regulator (9) being located between the radiator assembly (7) and the steering mechanism (3a).

10. The arrangement of the motorcycle voltage regulator according to claim 7, wherein vertical tubes (35) are arranged between the upper support tubes (32) and the lower support tubes (33).
